## Europäisches Patentamt
## European Patent Office
## Office européen des brevets

(19)

(11) Veröffentlichungsnummer : **0 033 759**
**B1**

(12)

# EUROPÄISCHE PATENTSCHRIFT

(45) Veröffentlichungstag der Patentschrift :
30.03.83

(21) Anmeldenummer : 80106103.7

(22) Anmeldetag : 08.10.80

(51) Int. Cl.³ : **B 01 D 23/24**

(54) **Verfahren zum Abführen des Schlammwassers aus dem Innenraum eines Filters und Filteranlage zur Durchführung des Verfahrens.**

(30) Priorität : 29.11.79 DE 2948091

(43) Veröffentlichungstag der Anmeldung :
19.08.81 Patentblatt 81/33

(45) Bekanntmachung des Hinweises auf die Patenterteilung : 30.03.83 Patentblatt 83/13

(84) Benannte Vertragsstaaten :
**CH DE FR LI LU NL**

(56) Entgegenhaltungen :
CH A 527 632
DE A 1 411 736
DE A 2 805 058
DE B 1 183 050
GB A 1 341 741
US A 3 459 305
US A 3 627 131

(73) Patentinhaber : WABAG Wasserreinigungsbau Alfred Kretzschmar GmbH & Co. KG
Postfach 2049 Lichtenfelser Strasse 53
D-8650 Kulmbach (DE)

(72) Erfinder : **Kretzschmar, Wolfgang**
**Kesselweg 27**
**D-8650 Kulmbach (DE)**

(74) Vertreter : Planker, Karl-Josef, Dipl.-Phys.
c/o BABCOCK-BSH AKTIENGESELLSCHAFT Postfach 4 + 6
D-4150 Krefeld 11 (DE)

EP 0 033 759 B1

Jouve, 18, rue St-Denis, 75001 Paris, France

Verfahren zum Abführen des Schlammwassers aus dem Innenraum eines Filters und Filteranlage zur Durchführung des Verfahrens

Die Erfindung befaßt sich mit einem Verfahren zum Abführen des Schlammwassers aus dem Überstauraum eines rückspülbaren Filters gemäß dem Oberbegriff des Anspruchs 1 sowie mit einer Filteranlage gemäß dem Oberbegriff der Ansprüche 4 und 5 zur Durchführung dieses Verfahrens.

Ein wesentlicher Verfahrensschritt bei der Wasseraufbereitung ist die Filtration. Diese besteht darin, daß das zu behandelnde Wasser — meist von oben nach unten — durch ein Filterbett aus körnigem Material geleitet wird. Hierbei lagern sich suspendierte Feststoffe an den Oberflächen des Filtermaterials an und füllen allmählich die Hohlräume zwischen dem Filtermaterial auf. Wenn das Porenvolumen des Filterbettes zu sehr verstopft ist, muß die Filtration unterbrochen und eine Rückspülung vorgenommen werden. Hierzu wird das Filterbett in umgekehrter Richtung mit einem kräftigen Wasserstrom oder auch mit einem Gemisch von Wasser und Druckluft beaufschlagt. Auf diese Weise wird das Filterbett aufgelockert. Die Verunreinigungen werden abgelöst und mit dem Spülwasser ausgetragen. Das mit den Schmutzteilchen angereicherte Spülwasser sammelt sich als Schlammwasser in einer Schlammwassersammelrinne. Diese ist bei den üblichen Filtern, bei denen der Rückspülstoß aufwärts gerichtet ist, in einem Überstauraum oberhalb des Filterbettes angeordnet. Von der Schlammwassersammelrinne geht eine Rohrleitung ab, die in der Praxis meistens mit freiem Gefälle zu einem Schlammwassersammelbecken geführt ist.

Ein Nachteil dieses Spülsystems besteht darin, daß das Schlammwassersammelbecken mit seinem Einlaufniveau relativ tief unter der Ablaufhöhe der Schlammwassersammelrinne des Filters angeordnet werden muß. Hierdurch ist man nicht frei in der Aufstellung des Filters. Entweder muß das Filter relativ hoch aufgestellt werden, um das Schlammwasser mit freiem Gefälle in ein zu ebener Erde angeordnetes Schlammwassersammelbecken ableiten zu können, oder das Schlammwassersammelbecken muß in die Erde hinein versenkt werden, um bei einem ebenerdig angeordneten Filter das notwendige Ablaufgefälle sicher zu stellen. Die eine oder die andere Maßnahme erhöht die jeweiligen Baukosten unverhältnismäßig hoch.

Die Problematik der Schlammwasserabführung wird bei den sogenannten Doppelfiltern noch erhöht. Ein Doppelfilter besteht aus zwei übereinander gesetzten Filterstufen, welche vom aufzubereitenden Wasser nacheinander von oben nach unten durchströmt werden. Da bei einer ebenerdigen Anordnung der ersten Stufe die zweite Stufe sich schon verhältnismäßig tief im Erdreich befindet, kann das Schlammwassersammelbecken nicht mehr mit freiem Gefälle erreicht werden. Stand der Technik ist, daß in so einem Bedarfsfalle ein relativ kleiner, aber tiefer Schacht vorgesehen wird, aus dem eine Zwischenpumpenanlage das anfallende Schlammwasser in die dann ebenerdig angeordneten Schlammwassersammelbecken pumpt. Diese Maßnahme führt zwangsläufig ebenfalls zu einer beträchtlichen Erhöhung der Baukosten und bringt einen zusätzlichen Regelaufwand für die Zwischenpumpenanlage mit sich.

Der Erfindung liegt die Aufgabe zugrunde, ein Verfahren anzugeben, bei dem der Aufwand für die Ermöglichung der Schlammwasserabführung zu einem höher gelegenen Schlammwassersammelbecken wesentlich verringert wird.

Diese Aufgabe wird durch die kennzeichnenden Merkmale des Anspruchs 1 gelöst.

Eine besonders einfache und daher bevorzugte Variante des erfindungsgemäßen Verfahrens ist in Anspruch 2 angegeben.

Bei Rückspülverfahren, bei denen die Rückspülung allein mit Wasser erfolgt, und ebenso bei der Zweiphasenrückspülung, bei der Wasser und Luft im Verlauf eines Spülprogramms in getrennten Programmschritten zugeführt werden, wird Druckluft zweckmäßig gemäß Anspruch 3 zugeführt. Die Luftzufuhr gemäß Anspruch 3 kann aber auch zusätzlich bei solchen Rückspülverfahren vorgesehen werden, bei denen die Rückspülung durch ein Gemisch von Luft und Wasser vorgenommen wird.

Zur Durchführung des erfindungsgemäßen Verfahrens geeignete Filteranlagen sind in den Ansprüchen 4 und 5 angegeben.

Durch die Ausgestaltung gemäß Anspruch 6 wird die Ausbildung einer Ablauftrombe verhindert, die in unerwünschter Weise die Druckluft mitreißen könnte.

Der Zeichnung dient zur Erläuterung der Erfindung und zeigt schematisch ein Ausführungsbeispiel einer erfindungsgemäßen Filteranlage.

Figur 1 zeigt die Filteranlage, links im Längsschnitt, rechts im Querschnitt durch das Filter ;

Figur 2 zeigt links einen Längsschnitt, rechts einen Querschnitt durch ein Filter zur Veranschaulichung einer Einzelheit.

Das Filter 1 hat ein geschlossenes, druckfestes Gehäuse. Darin ist ein mit Düsen 2 bestückter Filterboden 3 angeordnet. Auf dem Filterboden 3 ruht ein Filterbett 4. Unter dem Filterboden 3 befindet sich der Filtratsammelraum 5.

Im normalen Filtrationsbetrieb wird das Rohwasser durch einen Einlauf 6 zugeführt. Der Überstauraum 7 oberhalb des Filterbettes 4 ist mit Wasser gefüllt und steht unter einem Betriebsdruck, der je nach den statischen Möglichkeiten des Filtergehäuses und des Filterbodens erheblich über dem Atmosphärendruck liegt. Das Filtrat wird durch einen Ablauf 8 aus dem Filtratsammelraum 5 abgeführt.

Zum Rückspülen wird das Wasser oberhalb der über dem Filterbett 4 angeordneten Schlammwassersammelrinne 9 abgelassen. Die Leitungen 6 und 8 werden mittels nicht dargestellter Ventile abgesperrt. Mit einer Pumpe 13 wird Spülwasser in den Filtratsammelraum 5 eingedrückt. Es gelangt zusammen mit Spülluft, die von dem Gebläse 11 über das nunmehr geöffnete Ventil 14 eingeblasen wird, durch die Düsen 2 in das Filterbett 4 und durchströmt dieses von unten nach oben. Dabei reichert es sich mit Schmutzpartikeln ab. Als Schlammwasser gelangt es in den Überstauraum 7, der in dieser Phase als Schlammwassersammelraum dient. Es läuft über die Überfallkanten der Schlammwassersammelrinne 9 in diese ein. Unter dem im Überstauraum 7 herrschenden Druck wird das Wasser durch die Schlammwasserabführleitung 15 zu dem höher gelegenen Schlammwassersammelbecken 16 gedrückt. Die Leitung 15 ist unmittelbar, d. h. ohne Einschaltung einer Pumpe oder eines Zwischenspeichers, von dem Filter 1 zu dem Schlammwassersammelbecken 16 geführt.

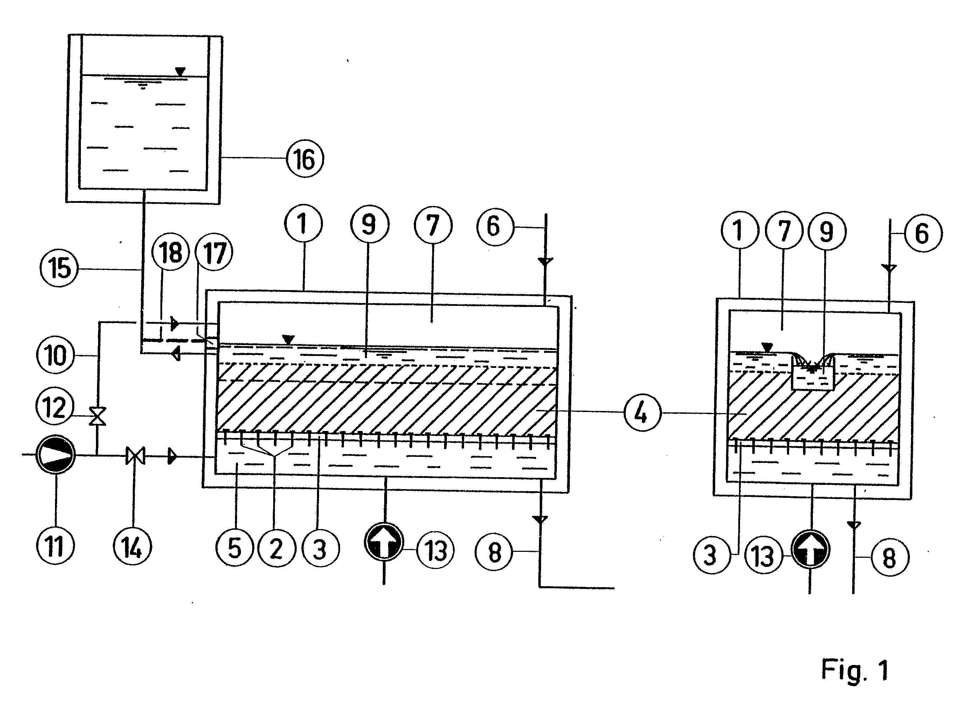

Um das Schlammwasser über die gesamte Filterlänge gleichmäßig abziehen zu können, muß der Einlaufwasserpegel in die Schlammwassersammelrinne einen eingestauten Überfall ermöglichen. Der Schlammwasserspiegel in dem Überstauraum 7 wird dabei auf einen Sollwert eingeregelt, der maximal etwa 5 cm über der Überfallkante der Sammelrinne 9 liegt. Hierzu ist die Wand des Filtergehäuses mit einem schmalen Schlitz 17 versehen, der über ein dünnes, in Fig. 1 gestrichelt angedeutetes Rohr 18 eine direkte Verbindung zwischen dem Überstauraum 7 und der Leitung 15 herstellt. Die Oberkante des Schlitzes 17 entspricht dem Sollniveau des Wasserspiegels. Die Schlitzöffnung ist so klein, daß die austretende Wassermenge im Vergleich zu der Wassermenge, die aus der Schlammwassersammelrinne 9 direkt in die Leitung 15 abfließt, sehr gering ist. Wenn die im Überschuß zugeführte Druckluft den Wasserspiegel unter das Sollniveau heruntergedrückt hat, wird der Schlitz 17 frei und läßt die überschüssige Luft durch die Leitung 18 in die Leitung 15 entweichen. Bei einem Ansteigen des Wasserspiegels über das Sollniveau hinaus wird das Entweichen der Luft durch den Selbstverschluß des Wassers verhindert. Die von dem Gebläse 11 laufend weiter zugeführte Luft drückt den Wasserspiegel wieder in Richtung auf das Sollniveau zurück. So bildet sich bei im wesentlichen konstantem Wasserspiegel genau der Druck aus, der erforderlich ist, um das Schlammwasser zu dem Schlammwassersammelbecken 16 zu drücken.

Gemäß einer anderen, in der Zeichnung nicht dargestellten Ausführungsform kann die Niveauregelung auch in der Weise erfolgen, daß ein in die Gehäusewand des Filters 1 eingesetztes Stellventil über einen Schwimmer betätigt wird, so daß bei Unterschreitung eines vorgegebenen Niveaus das Stellventil geöffnet wird.

Es ist auch möglich, die Druckluft ganz oder teilweise durch Öffnen eines Ventils 12 über eine Leitung 10 von dem Gebläse 11 direkt dem Überstauraum 7 zuzuführen.

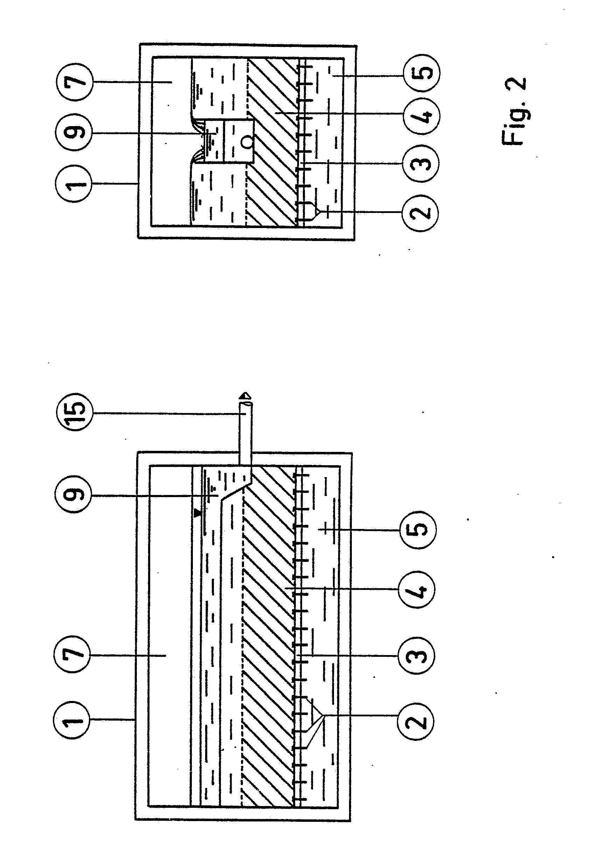

Gemäß Fig. 2 ist die Schlammwassersammelrinne 9 in der Nähe der Einmündung der Leitung 15 tief nach unten gezogen. Dadurch wird verhindert, daß sich beim Ablauf des Schlammwassers eine Ablauftrombe bilden kann, welche in unkontrollierbarer Weise Luft aus dem darüberstehenden Luftpolster absaugt. Je tiefer die Schlammwassersammelrinne 9 nach unten gezogen ist und je tiefer damit die Einmündung der Leitung 15 liegt, desdo unwahrscheinlicher ist die Ausbildung einer Ablauftrombe.

Aufgrund der Erfindung können sogar Filter, welche aus technischen Gründen unterhalb der Erdoberfläche angeordnet sind, ihr Schlammwasser in Schlammwassersammelbecken entleeren, welche zu ebener Erde liegen.

Der apparative Aufwand für das neue Verfahren ist im allgemeinen sehr gering, da für die Rückspülung in den meisten Fällen ein Spülluftgebläse sowieso vorhanden ist. Rückspülpumpe und Spülluftgebläse brauchen nur jeweils auf den erforderlichen Enddruck, welcher im wesentlichen durch die Lage des Schlammwassersammelbeckens gegeben ist, ausgelegt zu werden.

**Ansprüche**

1. Verfahren zum Abführen des Schlammwassers aus dem Überstauraum eines unter Druckluftzufuhr rückspülbaren Filters zu einem erhöht angeordneten Schlammwassersammelbecken, dadurch gekennzeichnet, daß während des Rückspülvorganges im Innenraum des Filters (1) durch Luftzufuhr ein Druck eingestellt wird, der dem Höhenunterschied zwischen dem Schlammwasserauslaß des Filters (1) und dem Schlammwassersammelbecken (16) entspricht, und daß der Wasserspiegel des in Spülung begriffenen Filters (1) durch Beeinflussung der im Filter (1) eingeschlossenen Luftmenge auf ein im wesentlichen konstantes Niveau eingeregelt wird.

2. Verfahren nach Anspruch 1, dadurch gekennzeichnet, daß Luft im Überschuß zugeführt und die überschüssige Luft entsprechend der Abweichung des Wasserspiegels von seinem Sollwert abgelassen wird.

3. Verfahren nach Anspruch 1 oder 2, dadurch gekennzeichnet, daß die Luft direkt in den Überstauraum (7) eingedrückt wird.

4. Filteranlage zur Durchführung des Verfahrens nach einem der Ansprüche 1 bis 3, mit einem in einem geschlossenen Gehäuse untergebrachten Filterbett, einer in einem Überstauraum über dem Filterbett angeordneten Schlammwassersammelrinne, einem oberhalb des Filters angeordneten Schlammwassersammelbecken und einer von dem Filter ausgehenden, in dem Schlammwassersammelbecken endenden Schlammwasserabführleitung, dadurch gekennzeichnet, daß die Schlammwasserabführleitung (15) unmittelbar vom Filter (1) zum Schlammwassersammelbecken (16) geführt ist und daß über eine in der Gehäusewand des Filters (1) bis zur Höhe des Sollniveaus des Wasserspiegels reichende Öffnung (17) der Überstauraum (7) mit der Schlammwasserabführleitung (15) verbunden ist.

5. Filteranlage zur Durchführung des Verfahrens nach einem der Ansprüche 1 bis 3, mit einem in einem geschlossenen Gehäuse untergebrachten Filterbett, einer in einem Überstauraum über dem Filterbett angeordneten Schlammwassersammelrinne, einem oberhalb des Filters angeordneten Schlammwassersammelbecken und einer von dem Filter ausgehenden.

in dem Schlammwassersammelbecken endenden Schlammwasserabführleitung, dadurch gekennzeichnet, daß die Schlammwasserabführleitung (15) unmittelbar vom Filter (1) zum Schlammwassersammelbecken (16) geführt ist und daß ein Regelkreis mit einer Meßeinrichtung für den Wasserspiegel (Schwimmer) und einem Stellventil für einen Luftauslaß vorgesehen ist.

6. Filteranlage nach Anspruch 4 oder 5, dadurch gekennzeichnet, daß die Schlammwassersammelrinne (9) in der Nähe der Einmündung der Schlammwasserabführleitung (15) tief nach unten gezogen ist.

## Claims

1. Process for passing the slurry from the inlet compartment of a filter backwashable under the addition of compressed air to a slurry collecting tank in a raised position, characterized by a pressure corresponding to the difference in height between the slurry outlet of the filter (1) and the slurry collecting tank (16) being producted during the backwashing process in the interior of the filter (1) by the addition of air, and by the water level of the filter (1) during the backwashing process being adjusted and maintained at an essentially constant level by influencing the volume of air contained in the filter (1).

2. Process in accordance with claim 1, characterized by excess rates of air being added and the excess air being removed in accordance with the deviation of the water level from its preset value.

3. Process in accordance with claim 1 or 2, characterized by the air being pressed into the inlet compartment (7) direct.

4. Filtering unit for carrying out the process in accordance with one of the claims 1-3, comprising a filter bed in a closed housing, a slurry collecting trough located in an inlet compartment above the filter bed, a slurry collecting tank located above the filter and a slurry discharge pipe running from the filter to the slurry collecting tank, characterized by the slurry discharge pipe (15) running from the filter (1) to the slurry collecting tank (16) direct and by the inlet compartment (7) being connected to the slurry discharge pipe (15) by an opening (17) in the housing wall of the filter (1) reaching up to the preset water level.

5. Filtering unit for carrying out the process in accordance with one of the claims 1-3, comprising a filter bed in a closed housing, a slurry collecting trough located in an inlet compartment above the filter bed, a slurry collecting tank located above the filter and a slurry discharge pipe running from the filter to the slurry collecting tank, characterized by the slurry discharge pipe (15) running from the filter (1) to the slurry collecting tank (16) direct and by a regulating circuit with a level sensor (float) and a control valve for an air outlet being provided.

6. Filtering unit in accordance with claim 4 or 5, characterized by the slurry collecting trough (9) near the connecting point of the slurry discharge pipe (15) having been considerably deepened.

## Revendications

1. Procédé pour l'évacuation du liquide surnageant chargé, de l'espace inondable d'un filtre pouvant être lavé à contre-courant par acheminement d'air sous pression vers un bassin de retenue de ce liquide disposé en hauteur, procédé caractérisé en ce que, pendant le balayage à contre-courant de l'espace intérieur du filtre (1) par acheminement d'air, on produit une pression qui correspond à la différence de hauteur entre la sortie du liquide surnageant du filtre (1) et le bassin de retenue (16), et en ce que, en agissant sur la quantité d'air emprisonné dans le filtre (1), on règle à un niveau essentiellement constant le niveau de l'eau dans le filtre (1) soumis à lavage et balayage.

2. Procédé selon la revendication 1, caractérisé en ce que l'air est acheminé en excès et en ce qu'on laisse s'échapper l'air en excès en fonction de l'écart du niveau d'eau par rapport à sa valeur de consigne.

3. Procédé selon la revendication 1 ou 2, caractérisé en ce que l'air est directement refoulé dans l'espace (7) inondable.

4. Installation de filtration pour la mise en œuvre du procédé selon l'une quelconque des revendications 1 à 3, comportant un lit filtrant placé dans une enveloppe fermée, un canal collecteur de liquide surnageant disposé au-dessus du lit filtrant dans un espace inondable, un bassin de retenue du liquide collecteur placé au-dessus du filtre et une conduite d'évacuation du liquide surnageant partant du filtre et se terminant dans le bassin de retenue de ce liquide surnageant, installation caractérisée en ce que la conduite (15) d'évacuation du liquide surnageant relie directement le filtre (1) au bassin de retenue (16) de ce liquide surnageant, et en ce que l'espace (7) inondable est relié, par l'intermédiaire d'une ouverture (17) atteignant la hauteur du niveau de consigne de l'eau, avec la conduite (15) d'évacuation du liquide surnageant chargé.

5. Installation de filtration pour la mise en œuvre du procédé selon l'une quelconque des revendications 1 à 3, comportant un lit filtrant placé dans une enveloppe fermée, un canal collecteur de liquide surnageant disposé dans un espace inondable au-dessus du lit filtrant, un bassin de retenue du liquide surnageant disposé au-dessus du filtre et une conduite d'évacuation du liquide surnageant qui part du filtre et se termine dans le bassin de retenue du liquide surnageant, installation caractérisée en ce que la conduite (15) d'évacuation du liquide surnageant relie directement le filtre (1) au bassin de retenue (16) du liquide surnageant et en ce qu'il est prévu un circuit de régulation comportant un dispositif de mesure du niveau de l'eau (flotteur) et une servo-soupape pour laisser l'air sortir.

6. Installation de filtration selon la revendication 4 ou 5, caractérisée en ce que le canal collecteur (9) est profondément décalé vers le bas au voisinage de l'embouchure de la conduite (15) d'évacuation du liquide surnageant.

Fig. 1

0 033 759

Fig. 2